# EUROPEAN PATENT APPLICATION

(11) **EP 3 964 748 A1**
(43) Date of publication of application: **09.03.2022**
(21) Application number: 21194491.3
(22) Date of filing: 02.09.2021
(51) Int. Cl.: F21S 43/20, F21S 43/40, G02B 5/02

(54) **A LIGHT ASSEMBLY**

(30) Priority: 03.09.2020 IN 202021037992
(71) Applicant: Varroc Engineering Limited, 431136 Maharashtra Aurangabad (IN)
(72) Inventor: AHUJA, Lalit Ramesh, 411019 Maharashtra (IN); BARANWAL, Vaibhav, 412101 Maharashtra (IN)
(74) Representative: Werhahn, Jasper Carl

(57) **Abstract**

Disclosed is a light assembly (100) for an automobile. Further, the light assembly (100) for the automobile comprising at least one light source (112), at least one reflector (104) and an outer lens (106). Further, the at least one reflector (104) configured to receive an emitted light from the at least one light source (112). Further, the outer lens (106) configured to receive a reflected light from the at least one reflector (104). Furthermore, the outer lens (106) comprises a plurality of facet surfaces (202) arranged in random orientation at different angles with respect to one another in a non-repetitive pattern to provide a three dimensional (3D) like illumination.

## Description

### CROSS-REFERENCE TO RELATED APPLICATIONS AND PRIORITY

The present application does claim priority from provisional Indian patent application 202021037992 filed on 3rd September 2020.

### TECHNICAL FIELD

The present subject matter described herein, in general, relates to a light assembly for an automobile. More particularly, the present subject matter relates to a taillight assembly with an improved optical design to provide a three dimensional (3D) like illumination.

### BACKGROUND

Generally, a lighting system is provided in a vehicle as a means for illuminating especially during night-time driving and as a means for indicating various signals during driving. Among lighting systems of the vehicle which are installed for this purpose, rear lamps which are mounted at both rear edges of a vehicle body are components in which a brake light, a taillight, and a turn signal are combined. The taillight provides a safety aspect of the vehicle. These lamps show the rear edge of the vehicle to allow other drivers to appropriately anticipate the size and shape of the vehicle. In addition, they allow other vehicles to see the car in inclement weather such as rain or snow.

The rear lamp of the vehicle contributes increasingly to the design of the vehicle. The design of the rear lamp gives the vehicle a characteristic appearance. Lately, there has been a trend to improve the design of the taillight to provide a crystal-like illumination. In most prior art, this effect has been achieved by using a costly reflector or/and by using a sheet of holographic/lenticular films. These solutions are costly and are available only in high end version of the cars.

Thus, there is a need for a light assembly with an improved optical design to provide a crystal-like three-dimensional effect. The design should be low cost which can be incorporated to all vehicles across the automotive segment.

### SUMMARY

This summary is provided to introduce the concepts related to a system for post steaming of paddy and the concepts are further described in the detail description. This summary is not intended to identify essential features of the claimed subject matter, nor it is intended to use in determining or limiting the scope of claimed subject matter.

In the present subject matter, a light assembly for an automobile comprises at least one light source, at least one reflector and an outer lens. Further, the at least one reflector configured to receive an emitted light from the at least one light source. Further, the outer lens configured to receive a reflected light from the at least one reflector. Further, the outer lens comprises a plurality of facet surfaces arranged in random orientation at different angles with respect to one another in a non-repetitive pattern to provide a three dimensional (3D) like illumination.

### BRIEF DESCRIPTION OF DRAWINGS

The detailed description is described with reference to the accompanying figures. In the Figures, the left-most digit(s) of a reference number identifies the Figure in which the reference number first appears. The same numbers are used throughout the drawings to refer like features and components.
Figure 1 illustrates a light assembly (100) for an automobile, in accordance with an embodiment of a present subject matter.
Figure 2 illustrates an outlet lens (200) of the light assembly (100), in accordance with an embodiment of a present subject matter.
Figure 3 illustrates a plurality of facet surfaces (300) arranged in random orientation on the outlet lens (200), in accordance with an embodiment of a present subject matter.
Figure 4 illustrates a three dimensional (3D) like illumination (400), in accordance with an embodiment of a present subject matter.
Figure 5 illustrates an integrated light assembly (500) for the automobile, in accordance with an embodiment of a present subject matter.

### DETAILED DESCRIPTION

Reference throughout the specification to "various embodiments," "some embodiments," "one embodiment," or "an embodiment" means that a particular feature, structure, or characteristic described in connection with the embodiment is included in at least one embodiment. Thus, appearances of the phrases "in various embodiments," "in some embodiments," "in one embodiment," or "in an embodiment" in places throughout the specification are not necessarily all referring to the same embodiment. Furthermore, the particular features, structures or characteristics may be combined in any suitable manner in one or more embodiments.

As used herein the term "automobile" is defined as a system for transporting people, animals or cargo by road. The term is intended to include, but not be limited to, motorized and non-motorized transportation systems, and is also intended to include automobiles with two, three, or more wheels. Non-limiting examples of such automobiles may include bicycles, motor-cycles, scooters, cars, trucks and the like.

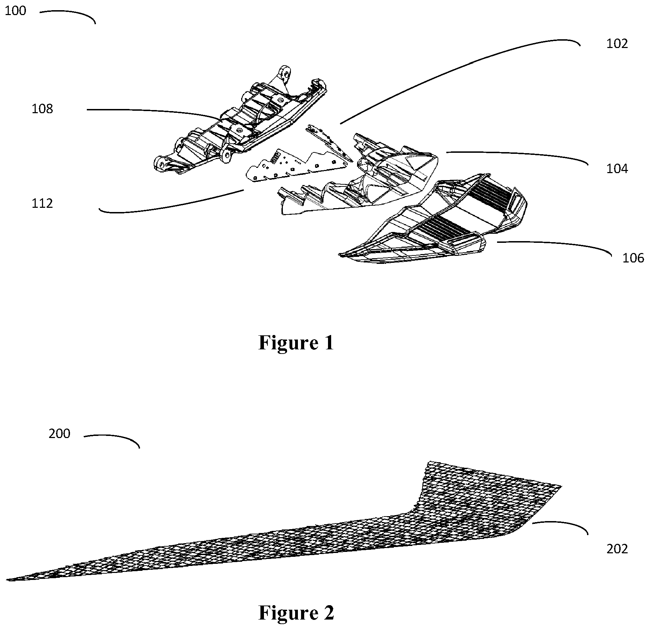

Now referring to Figure 1, illustrates a light assembly (100) for an automobile in accordance with an embodiment of the present subject matter. The light assembly (100) for the automobile, may comprise at least one light source (112), at least one reflector (104) and an outer lens (106). Further, the at least one reflector (104) configured to receive an emitted light from the at least one light source (112). The light is further reflected from the at least one reflector (104) on to the outer lens (106). Furthermore, the outer lens (106) comprises a plurality of surfaces/facets (202) arranged in a random orientation at different angles with respect to one another in a non-repetitive pattern to provide a three dimensional (3D) like illumination. Each surfaces/facet (202) from the plurality of surfaces/facets (202) have distinct angles with respect to light source in positive horizontal X axis.

In an exemplary embodiment of the present invention, the at least one light source (112) may be mounted on at least one light emitting unit (102). Further, the at least one light emitting unit (102) comprises of a housing (108). In accordance with the embodiment of the present invention, the light unit (112) includes of the at least one light source (112) mounted on a thermoplastic material. In one embodiment of the present invention, non-limiting example of the thermoplastic material like Acrylic (PMMA), polycarbonate (PC). In one embodiment of the present invention, the at least one light source (112) may include, but is not limited to, bulbs, fluorescent bulbs, light emitting diodes, and the like. The housing (108) could suppress the heat generated off the at least one light source (112) making light emitting unit (102) thermally stable.

In an embodiment of the invention, light emitting unit (102) can be shaped into any size, thereby providing increased freedom for its placement within the light assembly (100).

In an embodiment of the invention, the at least one reflector (104) may comprise at least one reflecting surface. Further, the at least one reflecting surface is a plain metalized surface. In one embodiment of the present invention, the metalized surface may be made up of aluminium. In another embodiment of the invention, the reflecting surface is a structured metalized surface. The structured metalized surface is obtained by coating a surface material with a metal. Non-limiting examples of surface material may be plastic, ceramic, glass and the like. In one embodiment of the present invention the structured metalized surface can be obtained by coating aluminium onto a plastic surface. The aluminium coating aids in reflecting maximum light to the outer lens (106) and avoids light absorption at the at least one reflector (104). In another embodiment of the invention, the opening in the at least one reflector (104) for collecting the emitted light from the at least one light source (102) is wide enough to collect at least 120 degrees angular light to the reflecting surface without obstruction.

In an embodiment of the present invention, the structure of the outer lens (106) can be a flat surface. In another embodiment of the present invention, the structure of the outer lens (106) can be a curved surface. The surface will aid to provide a 3D crystal effect across the lamp styling. In an embodiment of the invention, the material of the outer lens is plastic. Non-limiting examples of plastic may be Poly (methyl methacrylate) (PMMA), Polycarbonate (PC) and the like.

Now referring to Figure 2, the outlet lens (200) of the light assembly (100) is illustrated, in accordance with an embodiment of a present subject matter in an embodiment of the present invention. Further, the outlet lens (200) comprises an inner surface. Further, the inner surface of the outer lens (200) comprises a plurality of facet surfaces (202) arranged in random orientation at different angles with respect to one another in a non-repetitive pattern to provide a three dimensional (3D) like illumination.

In an embodiment of the present invention, the inner surface of the outer lens (200) is made of the plurality of facets surfaces (202) having a size in a range from about 0.5mm x 0.5mm to about 3mm x 3mm. In another embodiment of the present invention, the inner surface of the outer lens (200) is made of the plurality of facets surfaces (202) having a size in a range from about 0.7mm x 0.7 mm to 1mm x 1mm. In yet another embodiment of the present invention, the plurality of facets surfaces (202) may be connected to each other with a draft surface.

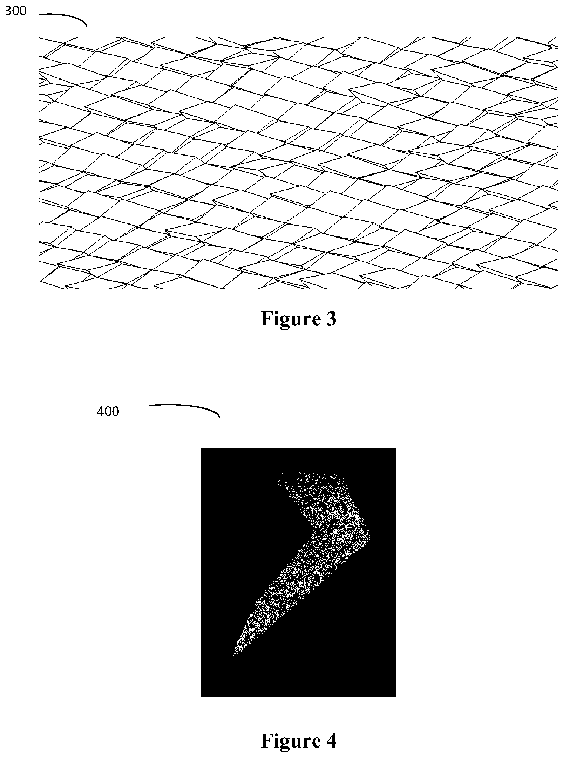

Now referring to figure 3, the plurality of facet surfaces (300) arranged in random orientation on the outlet lens (200) is illustrated, in accordance with the embodiment of the present subject matter. In one embodiment of the present invention, the plurality of facet surfaces (300) is arranged in various vertical orientations and horizontal orientation. In another embodiment of the present invention, the plurality of facet surfaces (300) may be arranged in a random orientation. In one embodiment of the present invention, the random angles for vertical orientations and horizontal orientation may be in a range from about 0 degrees to 60 degrees. In yet another embodiment of the present invention, the vertical orientations and horizontal orientations of the plurality of facet surfaces (300) are randomly generated in computer aided design software. In one embodiment of the present invention, the base orientation plane is considered normal to the light emitting direction of the at least one reflector (104) and is not dependent on the orientation of the light emitting unit and the emitted light. In another embodiment of the present invention, the random orientations of the plurality of facet surfaces (300) refract the light off the coated reflector in various directions. This allow the lens to be perceived like a crystal/star dust with varying viewing positions and allow the lamp to be perceived as 3D crystal effect.

Now referring to Figure 4, the three dimensional (3D) like illumination (400) provided by the light assembly (100) is illustrated, in accordance with the embodiment of the present subject matter. The illumination (400) shows a light pattern generated by a plurality of surface/facets upon receiving light from the reflector.

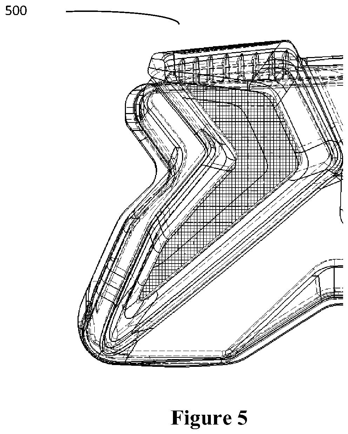

Now referring to Figure 5, an integrated light assembly (500) for the automobile is illustrated, in accordance with the embodiment of the present subject matter. The light assembly (500) as disclosed comprises at least one light source (112), and at least one reflector (104) configured to receive light directly or indirectly from the at least on light source (112). Further the light is reflected to an outer lens (106). Further, the at least one light emitting unit (102) comprises of a housing (108), wherein the at least one light emitting unit (102) may be housed in the housing (108). Further the housing (108) may supress the heat generated off the at least one light source (112) making light emitting unit (102) thermally stable.

The embodiments illustrated above, especially related to the light assembly for the automobile provide following advantages:
- The light assembly for the automobile provides improved appearance due to three dimensional (3D) like illumination.
- The light assembly for the automobile is cheap.

Various modifications to the embodiment will be readily apparent to those skilled in the art and the generic principles herein may be applied to other embodiments. However, one of ordinary skill in the art will readily recognize that the present disclosure is not intended to be limited to the embodiments illustrated but is to be accorded the widest scope consistent with the principles and features described herein.

The foregoing description shall be interpreted as illustrative and not in any limiting sense. A person of ordinary skill in the art would understand that certain modifications could come within the scope of this disclosure.

The embodiments, examples and alternatives of the preceding paragraphs or the description and drawings, including any of their various aspects or respective individual features, may be taken independently or in any combination. Features described in connection with one embodiment are applicable to all embodiments, unless such features are incompatible.

## Claims

1. A light assembly (100) for an automobile, comprising:
at least one light source (112);
at least one reflector (104) configured to receive an emitted light from the at least one light source (112); and
an outer lens (106) configured to receive a reflected light from the at least one reflector (104), wherein the outer lens (106) comprises a plurality of surfaces/facets (202) arranged in a random orientation wherein each surface/facet from the plurality of surfaces/facets (202) has a different angle with respect to at least one other surface/facet in a non-repetitive pattern to provide a three dimensional (3D) like illumination, and
wherein each surface/facet (202) from the plurality of surfaces/facets (202) has a distinct angle with respect to the at least one light source in a positive horizontal X axis.

2. The light assembly (100) as claimed in claim 1, wherein light assembly (100) is a taillight assembly, and wherein the taillight assembly is configured to perform a plurality of functions like a brake light, a taillight, and a turn signal.

3. The light assembly (100) as claimed in claim 1, wherein the at least one reflector (104) comprises at least one reflecting surface, wherein the at least one reflecting surface is metallized surface.

4. The light assembly as claimed in claim 1, wherein the outer lens (106) is made of a plastic material.

5. The light assembly as claimed in claim 1, wherein the outer lens (106) comprises an inner surface, wherein the inner surface comprises the plurality of surfaces/facets (202) arranged in the random orientation.

6. The light assembly as claimed in claim 1, wherein the plurality of surfaces/facets (202) arranged in a random angle, wherein the random angles for vertical orientations and horizontal orientation of the plurality of facets/surfaces (202) is in a range from about 0 degrees to 60 degrees.

7. The light assembly as claimed in claim 1, wherein the plurality of surfaces/facets (202) are configured to connect to each other with a draft surface.

8. The light assembly as claimed in claim 1, wherein the random orientation of the plurality of facets/surfaces (202) is configured to diffract light in different directions to produce three-dimensional (3D) crystal illumination.
